# FASCICULE DE BREVET EUROPEEN

(11) **EP 1 789 949 B1**
(45) Date de publication et mention de la délivrance du brevet: **18.09.2013**
(21) Numéro de dépôt: 05798453.6
(22) Date de dépôt: 26.08.2005
(51) Int. Cl.: G09G 5/02, G09G 5/04, G03B 21/26, H04N 9/31

(54) **PROCÉDÉ ET SYSTÈME D'AFFICHAGE D'UNE IMAGE NUMÉRIQUE EN COULEURS VRAIES**
VERFAHREN UND SYSTEM ZUM ANZEIGEN VON DIGITALEN VOLLFARBENBILDERN
METHOD AND SYSTEM FOR DISPLAYING A DIGITAL FULL COLOUR IMAGE

(30) Priorité: 02.09.2004 FR 0409306
(43) Date de publication de la demande: 30.05.2007
(73) Titulaire: Optis, 83078 Toulon Cedex (FR)
(72) Inventeur: DELACOUR, Jacques, 83220 Le Pradet (FR)
(74) Mandataire: Domange, Maxime
(86) Numéro de dépôt international: PCT/FR2005/002151
(87) Numéro de publication internationale: WO 2006/027467

(56) Documents cités:
- EP-A- 1 450 302
- US-A- 4 843 599
- US-A1- 2003 011 613
- US-A1- 2004 046 939
- US-B1- 6 570 584

## Description

La présente invention concerne un procédé et un système d'affichage d'une image numérique en couleurs vraies.

Dans ce document, on appellera « image numérique en couleurs vraies », une image pour laquelle on dispose, pour chaque pixel, du spectre radiométrique sur tout le spectre de la lumière visible.

Une telle image peut être obtenue directement à l'aide d'une caméra multibande tel que décrit dans le document EP 1 450 302.

Une telle image peut également être obtenue par le logiciel de simulation de la lumière SPEOS qui permet de simuler l'éclairement ou la luminance d'une scène.

Ce logiciel, développé et commercialisé par la société OPTIS, a été décrit brièvement entre autres dans la revue « CAD Magazine » publiée en mars 2004.

Pour plus de précisions, l'homme du métier pourra se reporter au guide d'utilisation de ce logiciel : « User's guide - Speos 2004 SP1 - V.01 - Copyright 2004 » .

L'invention vise notamment à améliorer les procédés et systèmes d'affichage d'images connus à ce jour, qui reposent, en télévision comme en informatique, sur l'utilisation des trois couleurs primaires rouge, vert et bleu.

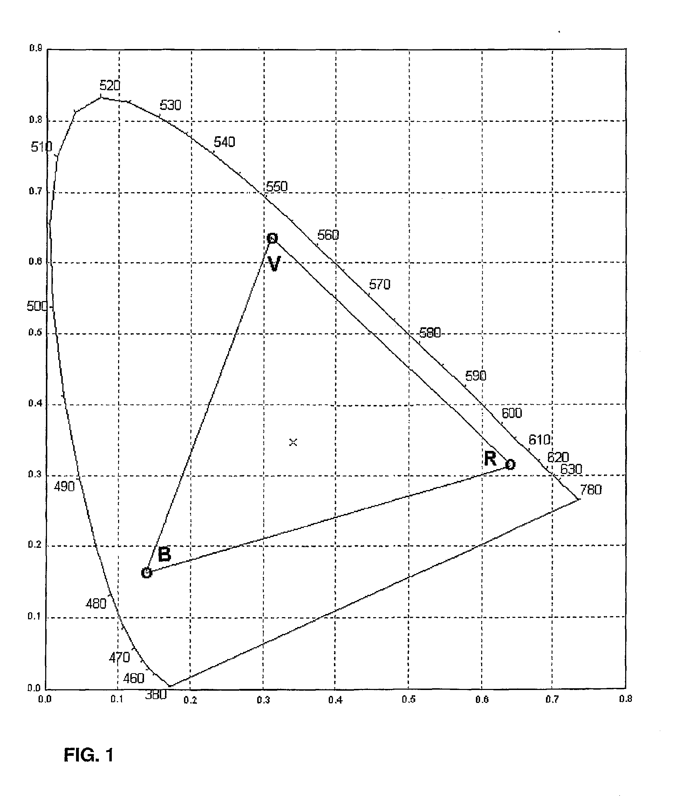

La **figure 1** représente la projection des trois couleurs primaires dans l'espace de couleurs visibles, conformément à l'état de la technique présenté brièvement ci-dessus.

La représentation de l'espace de couleur correspond au standard de colorimétrie CIE 1934 connu de l'homme du métier.

Cette figure comporte une courbe, le spectrum locus, qui est fermée par un segment de droite et qui délimite l'espace E des couleurs visibles.

Chacun des points de cette courbe correspond à un signal monochromatique dans l'intervalle [380nm, 780 nm]. Le segment de droite fermant la courbe représente les couleurs pourpres.

Cette figure comporte aussi trois points R, V et B représentant respectivement les couleurs primaires rouge, vert et bleu dans l'espace des couleurs visibles E d'un système d'affichage classique d'images en couleurs, ici un vidéo projecteur tri - LCD.

Ces trois points R, V, B qui dépendent du système d'affichage délimitent l'espace T, des couleurs affichables à partir de ces trois couleurs primaires.

Il apparaît clairement sur cette figure que cet espace T est sensiblement réduit par rapport à l'espace des couleurs visibles E. Ceci est particulièrement vrai pour les vidéos projecteurs tri - LCD dont les primaires d'affichage sont peu saturées.

Le choix historique d'utiliser trois couleurs primaires, bien que permettant l'affichage d'une large gamme de couleur, restreint l'espace des couleurs affichables, par rapport à l'espace des couleurs visibles. Cela est d'autant plus préjudiciable lorsque l'on souhaite afficher une image pour laquelle on dispose, pour chaque pixel, du spectre radiométrique sur tout le spectre de la lumière visible.

On note qu'il existe également des systèmes d'affichage d'une image représentée sur trois couleurs primaires d'origine, utilisant, pour l'affichage, un nombre de couleurs primaires supérieur à trois, par exemple 4 ou 6.

Dans de tels systèmes d'affichage, notamment le document US 6,570,584, on extrapole, pour chaque pixel d'une image, une composante associée à chaque couleur primaire d'affichage supplémentaire à partir des trois composantes d'origine. Cela permet d'augmenter artificiellement l'espace des couleurs affichables mais en quittant l'espace des couleurs vraies.

En particulier, le document US 2004/046939 décrit un système d'affichage d'image représentée sur trois couleurs primaires d'origine, ce système étant composé de deux projecteurs dont les projections sont superposées. Ce système possède trois entrées pour chacune des trois couleurs primaires d'origine. Le système décrit permet de calculer par extrapolation à partir de trois couleurs primaires d'origine, de nouvelles couleurs, par exemple trois, affichables par l'un des deux projecteurs.

Ainsi la qualité d'affichage de l'image obtenue par un tel système est limitée par la représentation initiale de cette image en trois couleurs primaires d'origine, même si ce système est adapté à en construire d'autres.

L'homme du métier comprendra que les couleurs affichées par le système proposé dans le document US 2004/046939, en dehors de l'espace T, sont des couleurs obtenues par extrapolation.

L'invention vise à pallier ces inconvénients en proposant un procédé d'affichage d'image respectant les couleurs vraies de l'image et s'interdisant toute extrapolation tout en maximisant le nombre de couleurs affichables.

A cet effet, elle vise un procédé d'affichage d'une image numérique qui comporte une étape d'obtention d'un spectre radiométrique pour chaque pixel de cette image et ce sur tout le spectre de la lumière visible. Le procédé comporte également une étape de sélection de six couleurs primaires :
○ on découpe un spectre blanc continu en six bandes spectrales jointives ;
○ on associe à chacune de ces bandes un point dans l'espace des couleurs dont la position dépend de la longueur d'onde centrale de ladite bande ; et on ajuste ces points de manière à optimiser la surface de l'hexagone reliant ces six points par rapport à l'ensemble des couleurs visibles.

Puis, pour chacun des pixels, et pour chacune des six couleurs primaires :
- on calcule un niveau de luminance directement à partir du spectre radiométrique sans passer par une étape intermédiaire de représentation de l'image sur la base de trois couleurs primaires ;
- on en déduit la valeur d'un signal de pilotage ; et
- on applique le signal de pilotage associé à cette couleur primaire dans un dispositif d'affichage adapté à reproduire chacune des couleurs primaires.

L'art antérieur d'affichage selon au moins quatre primaires consiste à passer par une représentation intermédiaire selon trois composantes rouge, vert et bleu normalisées, communément dénommées X, Y et Z dans la littérature.

Puis, les niveaux de chaque primaire sont calculés à partir de ces trois composantes intermédiaires X, Y et Z, grâce à une méthode utilisant l'espace des couleurs et non le spectre physique de la lumière.

De façon avantageuse, le procédé d'affichage selon l'invention calcule les niveaux de luminance associés à chaque primaire, directement à partir du spectre radiométrique, sans passer par une étape intermédiaire de représentation de l'image sur la base des trois couleurs primaires rouge, vert et bleu.

L'affichage se fait ainsi sur six couleurs primaires, sans perte d'information. Ceci augmente considérablement le nombre de couleurs affichables par rapport aux procédés classiques d'affichage RVB.

De plus, l'étape de sélection des six couleurs primaires permet de maximiser le nombre de couleurs affichables et donc l'espace des couleurs affichables par le procédé selon l'invention.

L'invention améliore ainsi les procédés existants d'affichage en évitant une représentation intermédiaire, généralement selon trois couleurs primaires, qui fait perdre de l'information spectrale et en maximisant le nombre de couleurs affichables.

Préférentiellement, le procédé d'affichage selon l'invention comporte en outre, pour chacune desdites couleurs primaires, une étape préalable de calcul d'un coefficient de calibration, à partir de la mesure du flux lumineux de ladite couleur primaire restitué par le dispositif d'affichage, ce coefficient de calibration étant pris en compte pour le calcul du signal de pilotage.

Cette pondération des composantes de chaque couleur primaire permet de garantir que l'affichage d'un spectre blanc donne un spectre parfaitement blanc. Préférentiellement, l'ajustement précité de la largeur des bandes s'effectue de manière à obtenir des niveaux de luminance visuelle sensiblement équivalents pour chacune de ces bandes.

Cette caractéristique permet avantageusement d'utiliser la même quantité de lumière pour l'affichage de chaque primaire, ce qui évite d'avoir à augmenter ou diminuer l'intensité d'une primaire de manière exagérée et permet ainsi de maximiser la dynamique d'affichage.

Dans un mode préféré de réalisation, on utilise un dispositif d'affichage constitué par deux vidéo projecteurs dont les images respectives sont superposées. Ces vidéo projecteurs sont des vidéo projecteurs standards dont les filtres dichroïques ont été remplacés par des filtres spécifiques adaptés à reproduire fidèlement les six primaires précitées, chaque vidéo projecteur reproduisant trois des six primaires.

Ce mode de réalisation permet ainsi de constituer un dispositif d'affichage en couleurs vraies en utilisant des vidéos projecteurs traditionnels à trois primaires Rouge, Vert, Bleu dont seuls les filtres colorés sont modifiés.

Préférentiellement, ces deux vidéo projecteurs sont connectés à une des sorties vidéo d'une même carte graphique de type « Dual Screen » installée dans un ordinateur, comme par exemple la carte Wildcat 7210 de la société 3Dlabs ou la carte QuadroFX 500 de la société NVidia.

Dans un autre mode de réalisation, deux cartes graphiques étant installées dans un ordinateur, un premier vidéo projecteur est connecté à la sortie vidéo d'une première carte graphique, un second vidéo projecteur est connecté à la sortie vidéo d'une seconde carte graphique.

Ces cartes sont synchronisées de manière à permettre de superposer les images respectives des deux projecteurs.

Dans ce mode de réalisation, on utilise ainsi avantageusement une carte graphique prévue pour une autre utilisation, ce qui permet de réaliser un dispositif d'affichage en vraies couleurs de façon très simple.

Corrélativement, l'invention concerne un système d'affichage d'une image numérique utile pour la mise en oeuvre d'un procédé selon l'invention comportant :
- un dispositif de génération d'un fichier informatique comportant des données représentatives d'un spectre radiométrique de chacun des pixels de cette image et ce sur tout le spectre de la lumière visible ;
- des moyens de sélection de six couleurs primaires par :
   - découpe d'un spectre blanc continu en six bandes spectrales jointives ;
   - association, à chacune desdites bandes, d'un point (P_{BL}) dans l'espace des couleurs dont la position dépend de la longueur d'onde centrale (λ_{BL}) de ladite bande (BL) ; et
   - ajustement desdits points (P_{BL}) de manière à optimiser la surface de l'hexagone (H) reliant les six points par rapport à l'ensemble des couleurs visibles ;
- des moyens de calcul adaptés à calculer, à partir dudit fichier, pour chacun des pixels et pour au moins quatre couleurs primaires :
   - un niveau de luminance directement à partir du spectre radiométrique sans passer par une étape intermédiaire de représentation de l'image sur la base de trois couleurs primaires ; et
   - un signal de pilotage associé à cette couleur primaire en fonction de la luminance ; et
- un dispositif d'affichage relié aux moyens de calcul et comportant au moins une entrée associée à chacune desdites couleurs primaires.

Les avantages particuliers du système d'affichage étant identiques à ceux du procédé décrit précédemment, ils ne seront pas rappelés ici.

D'autres aspects et avantages de la présente invention apparaîtront plus clairement à la lecture de la description de modes particuliers de réalisation qui va suivre, cette description étant donnée uniquement à titre d'exemple non limitatif et faite en référence aux dessins annexés sur lesquels :
- la figure 1, déjà décrite représente la projection de trois couleurs primaires dans l'espace de couleurs visibles, conformément à l'état de la technique ;
- la figure 2 représente les principales étapes d'un procédé d'affichage selon l'invention, dans un mode préféré de réalisation ;
- la figure 3 représente schématiquement le découpage d'un spectre blanc continu, conformément à la présente invention ;
- la figure 4 représente la projection des six couleurs primaires dans l'espace des couleurs visibles conformément à l'invention dans un mode préféré de réalisation ;
- la figure 5 représente un système de projection conforme à l'invention dans un mode préféré de réalisation ;
- les figures 6a et 6b représentent respectivement l'utilisation d'une carte de type « Dual screen » conformément à l'art antérieur et à l'invention.

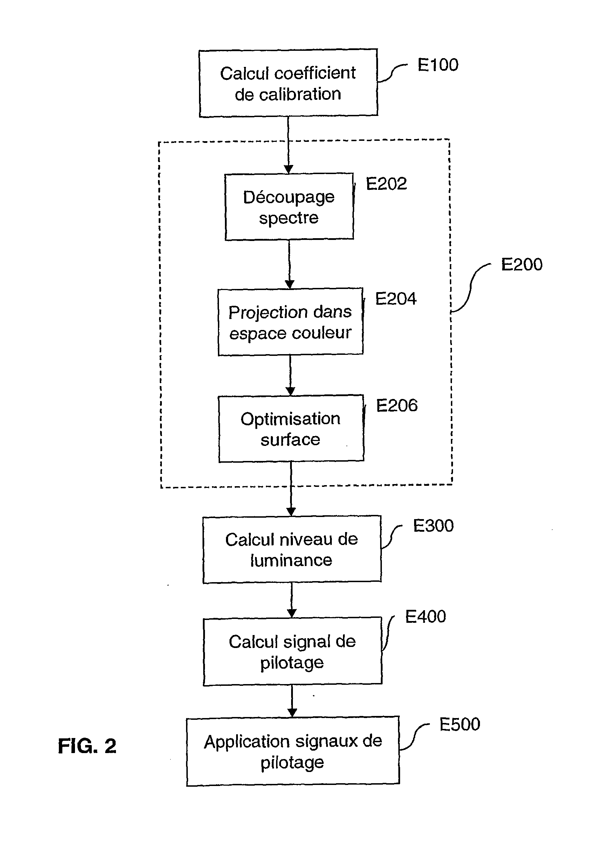

La figure 2 représente les principales étapes d'un procédé d'affichage selon l'invention, dans un mode préféré de réalisation.

A titre d'exemple, on détaillera l'affichage d'un fichier XMP généré par le logiciel SPEOS précité, ce fichier comportant le spectre radiométrique de chaque pixel d'une image dans le domaine du visible.

Plus précisément, ce fichier XMP comporte pour chaque pixel pix, la radiance S(pix,λᵢ) pour chaque longueur d'onde λᵢ prise dans un intervalle [λ_{MIN}, λ_{MAX}] avec un pas d'échantillonnage λ_{N}.

Dans un premier exemple de réalisation les valeurs λ_{MIN}, λ_{MAX} et λ_{N} sont respectivement égales à : 360nm, 830 nm et 1.

Au cours d'une première étape E200, comportant trois sous-étapes E202, E204 et E206, on sélectionne six couleurs primaires.

Au cours de la première sous-étape E202, on découpe un spectre blanc continu, c'est-à-dire constant entre 400nm et 700 nm, en six bandes spectrales jointives, respectivement baptisées : bleu (BL), cyan (CY), vert profond (VP), vert chou (VC), jaune (JA), et rouge (RO).

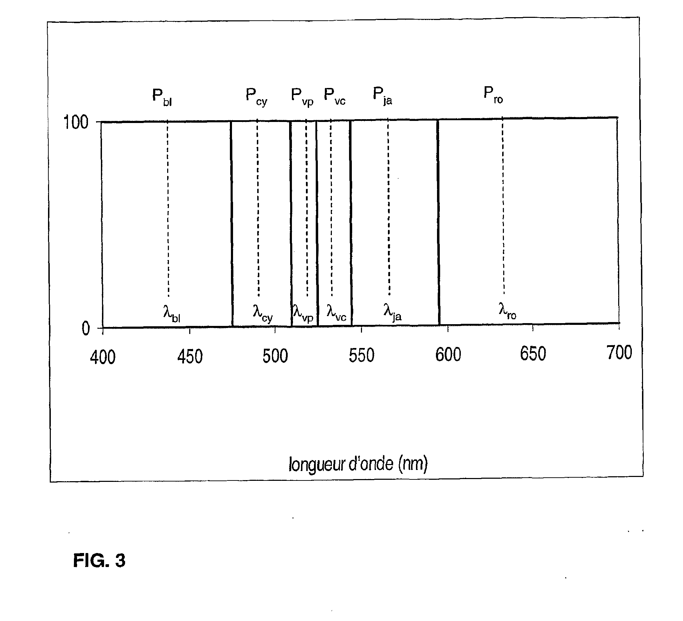

Ce découpage est représenté schématiquement à la **figure 3**. Sur cette figure, sont représentées également, les six longueurs d'ondes centrales de ces bandes, respectivement dénommées, λ_{BL}, λ_{CY}, λ_{VP}, λ_{VC}, λ_{JA} et λ_{RO}. Dans la réalité et en raison de la technologie utilisée, les bandes ne sont pas tout à fait jointives et elles n'ont pas la forme de créneaux.

Les six couleurs associées à ces six longueurs d'ondes centrales, baptisées elles aussi bleu (BL), cyan (CY), vert profond (VP), vert chou (VC), jaune (JA), et rouge (RO) pour simplification, sont par la suite dénommées « primaires ».

La sous-étape de découpage E202 est suivie par une deuxième sous-étape E204, au cours de laquelle on projette, dans l'espace des couleurs visibles, six points P_{BL}, P_{CY}, P_{VP}, P_{VC}, P_{JA} et P_{RO} dont la position dépend des six longueurs d'ondes centrales λ_{BL}, λ_{CY}, λ_{VP}, λ_{VC}, λ_{JA} et λ_{RO} précitées.

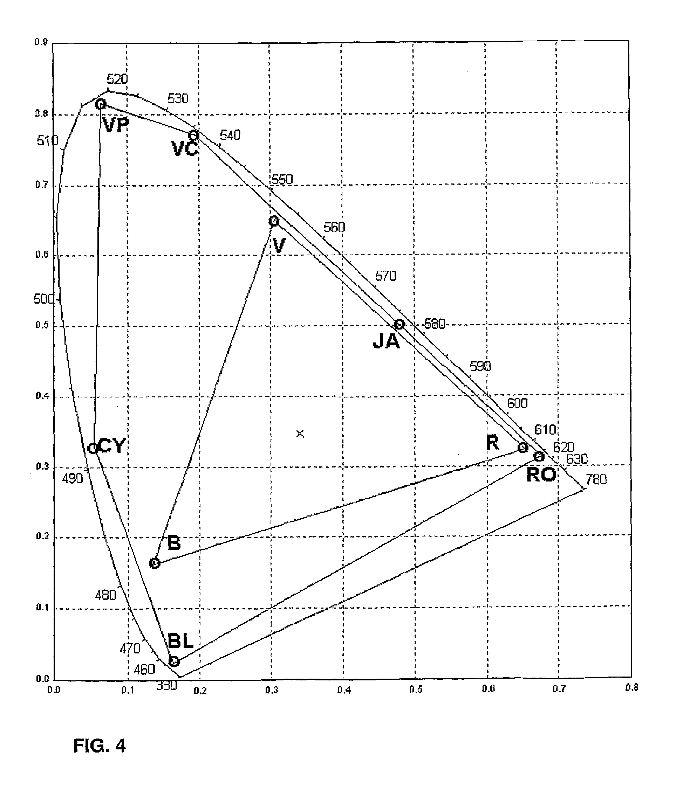

Ces six points définissent un hexagone H utilisé dans la suite du procédé. Cette projection est représentée schématiquement à la **figure 4**.

La sous-étape de projection E204 est suivie par une sous-étape E206 au cours de laquelle on maximise l'ensemble des couleurs affichables par le procédé d'affichage selon l'invention.

Cette étape consiste à faire varier la position des six points P_{BL}, P_{CY}, P_{VP}, P_{VC}, P_{JA} et P_{RO} de façon à maximiser la surface de l'hexagone H précité.

Dans le mode préféré de réalisation décrit ici, cette étape E206 d'optimisation, consiste à approximer le bord de l'espace des couleurs visibles par six segments de droites. Ces six segments de droite sont disposés de manière à approcher au mieux le bord de l'espace des couleurs visibles (technique dite de maillage).

Les sommets des segments définissent alors les longueurs d'onde centrales. Le découpage en bandes spectrales est alors effectué en centrant chaque bande sur chaque longueur d'onde centrale ainsi définie. Puis la largeur de chaque bande spectrale est ajustée de manière à ce que les puissances visuelles relatives (proportionnelles à des lumens) contenues dans chaque bande spectrale soient équivalentes.

Bien entendu, d'autres méthodes peuvent être utilisées pour maximiser la surface de l'hexagone H comme par exemple la méthode de calcul numérique des moindres carrés pondérés.

Cette sous-étape de maximisation E206 termine l'étape E200 de sélection des six couleurs primaires.

Le procédé d'affichage selon l'invention utilise un dispositif d'affichage adapté à reproduire les six primaires. Par la suite, on appellera « R_{LAMP} » le spectre d'émission absolu des sources lumineuses de ce dispositif d'affichage.

Dans le mode préféré de réalisation de l'invention décrit ici, ce dispositif d'affichage comporte six filtres dichroïques F_{BL}, F_{CY}, F_{VP}, F_{VC}, F_{JA} et F_{RO}, chacun d'entre eux étant conçu pour reproduire une des six couleurs primaires BL, CY, VP, VC, JA, et RO précitées.

Dans une variante préférée de réalisation, l'étape E200 de sélection des six couleurs primaires est suivie par une étape E100 de calcul de six coefficients de calibration γ_{BL}, γ_{CY}, γ_{VP}, γ_{VC}, γ_{JA} et γ_{RO} associés à chaque couleur primaire.

Ces coefficients de calibration permettent d'ajuster la balance des blancs, c'est-à-dire de garantir que l'affichage d'un spectre blanc donne un spectre blanc. Ces coefficients sont calculés une seule fois lors d'un réglage usine du dispositif.

Préférentiellement, le coefficient de calibration γ_{BL} associé à la primaire « bleu » est obtenu de la façon suivante, les autres coefficients étant obtenus de manière identique :
Le dispositif d'affichage affiche la primaire bleue avec la dynamique maximale. La luminance du bleu est alors mesurée à l'aide d'une caméra photométrique ou à l'aide de tout autre dispositif de mesure de luminance. Puis la luminance théorique du bleu (obtenue idéalement lorsque les primaires du dispositif d'affichage ont la même luminance) est calculée à l'aide des données spectrales de la primaire bleue. Le coefficient de calibration γ_{BL} s'obtient alors en calculant le rapport entre la luminance mesurée et la luminance théorique calculée.

Dans le mode préféré de réalisation décrit ici, l'étape E200 de calcul des coefficients de calibration est suivie par une étape E300 de calcul d'un niveau de luminance pour chaque pixel de l'image représentée par le fichier XMP, et pour chacune des couleurs primaires BL, CY, VP, VC, JA, et RO. Ce calcul est fait précédemment à chaque affichage d'une image par le dispositif.

En prenant l'exemple de la couleur primaire Bleu « BL », le niveau de luminance N(pix, BL) du pixel pix s'obtient en calculant la fraction d'énergie du spectre radiométrique de départ correspondant au spectre de la primaire bleue. Ce calcul, bien connu de l'homme du métier, correspond à une projection et fait intervenir un calcul intégral.

L'étape E300 de calcul des niveaux de luminance est suivie par une étape E400 au cours de laquelle on calcule, pour chaque couleur primaire, par exemple BL, une valeur d'un signal de pilotage V_{BL} en fonction du niveau de luminance N(pix, BL).

On obtient, dans le mode préféré de réalisation décrit ici, six valeurs signaux de pilotage V_{BL}, V_{CY}, V_{VP}, V_{VC}, V_{JA}, V_{RO} pour chaque composante BL, CY, VP, VC, JA et RO de l'image. A titre d'exemple, ces signaux de pilotage peuvent être de type composite, comme ceux utilisés par les moniteurs vidéo.

Ces six valeurs de signaux de pilotage sont ensuite appliquées, au cours d'une étape E500, aux six entrées du dispositif de pilotage selon l'invention pour l'affichage de l'image, chaque entrée contrôlant l'affichage d'une primaire donnée.

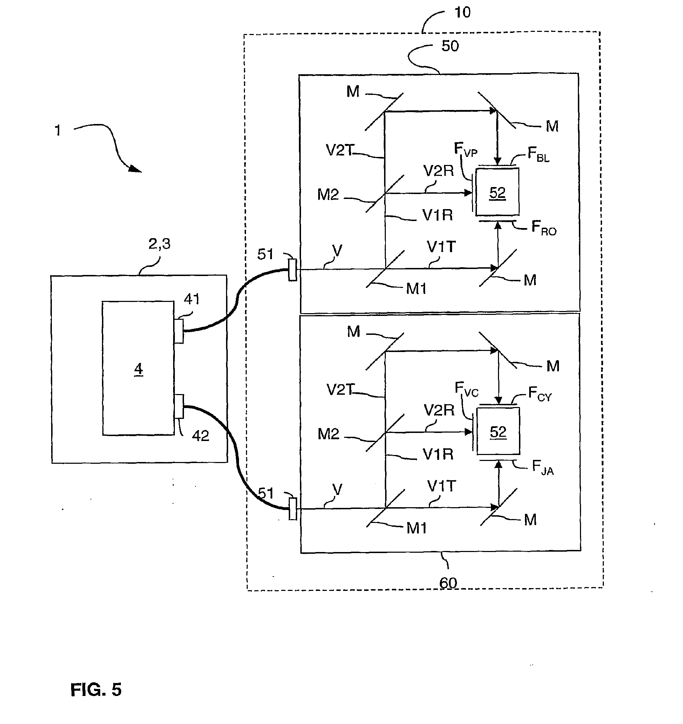

La figure 5 représente un système 1 de projection conforme à l'invention dans un mode préféré de réalisation.

Conformément à la présente invention, le système 1 comporte un dispositif 2 de génération d'un fichier informatique représentatif d'une image.

Dans le mode de réalisation décrit ici, ce fichier comporte pour chaque pixel de l'image des données de luminance et de répartition spectrale.

Dans le mode préféré de réalisation, le dispositif 2 de génération est constitué par un ordinateur personnel 3 mettant en oeuvre le logiciel de génération d'image SPEOS précité.

Avantageusement, ces logiciels d'image de synthèse, entièrement basés sur l'optique et la physique, utilisent l'intégralité du spectre de la lumière visible, sans restreindre l'information couleur. Ils permettent une génération d'images de synthèse mettant en oeuvre un algorithme spectral.

Dans le mode préféré de réalisation décrit ici, le système 1 d'affichage selon l'invention comporte deux video projecteurs 50 et 60.

Ces deux video projecteurs diffèrent l'un de l'autre par les caractéristiques optiques de leurs filtres dichroïques. Ces filtres dichroïques sont adaptés à reproduire les primaires BL, CY, VP, VC, JA et RO.

Le premier vidéo projecteur 50 comporte une entrée 51 pour trois des six signaux de pilotage V_{BL}, V_{VP}, V_{RO}, cette entrée pouvant, être par exemple une entrée VGA comme celle des moniteurs vidéo.

Le faisceau lumineux d'éclairage des matrices LCD est séparé en trois composantes primaires BL, VP et RO comme décrit ci-dessous.

Le premier vidéo projecteur 50 comporte un premier miroir dichroïque M1 placé à 45 degrés de l'axe de propagation du faisceau lumineux d'éclairage, fonctionnant dans la bande spectrale [390nm, 710 nm] comme un filtre passe-haut à longueur d'onde de coupure 545nm. Ce filtre agit comme un miroir. Il transmet la lumière au delà de 545nm et réfléchit la lumière en dessous de 545nm.

Le premier vidéo projecteur 50 comporte un miroir M, agencé parallèlement au premier miroir dichroïque M1, et adapté à réfléchir la partie V1 T du faisceau lumineux d'éclairage ayant traversé le premier miroir dichroïque M1 vers le filtre dichroïque F_{RO}. La lumière traversant le filtre F_{RO} a un spectre allant de 545 nm à 710 nm. Elle est alors filtrée de manière à ne laisser passer que la lumière correspondant à la primaire RO.

Le premier vidéo projecteur 50 comporte un deuxième miroir dichroïque M2, agencé parallèlement au premier miroir dichroïque M1, et adapté à recevoir la partie V1 R du faisceau lumineux d'éclairage réfléchie par le premier miroir dichroïque M1.

Le deuxième miroir dichroïque M2 placé à 45 degrés de l'axe de propagation du signal V1 R, fonctionne dans la bande spectrale [390nm, 540 nm] comme un filtre passe-bas à longueur d'onde de coupure 510nm. Ce filtre agit comme un miroir. Il transmet la lumière en dessous de 510nm et réfléchit la lumière au delà de 510nm.

Le deuxième miroir dichroïque M2 est adapté à réfléchir la partie V2R du du faisceau lumineux d'éclairage V1 R réfléchie par le premier miroir dichroïque M1 vers le filtre dichroïque F_{VP}. La lumière traversant le filtre F_{VP} a un spectre allant de 510 nm à 545 nm. Elle est alors filtrée de manière à ne laisser passer que la lumière correspondant à la primaire VP.

Le premier vidéo projecteur 50 comporte deux miroirs M, adaptés à réfléchir la partie V2T du faisceau lumineux d'éclairageV1R ayant traversé le deuxième miroir dichroïque M2 vers le filtre dichroïque F_{BL}. La lumière traversant le filtre F_{BL} a un spectre allant de 390 nm à 510 nm .Elle est alors filtrée de manière à ne laisser passer que la lumière correspondant à la primaire BL.

Cette opération nous donne ainsi trois faisceaux lumineux, les spectres respectifs de ces faisceaux lumineux étant ceux des couleurs primaires bleu, vert profond et rouge BL, VP et RO.

De façon connue, le premier vidéo projecteur 50 comporte un cube tri-LCD pour projeter l'image, chaque matrice LCD étant éclairée par un des faisceaux lumineux ainsi obtenus.

Le deuxième vidéo projecteur 60 est identique au premier vidéo projecteur 50, sauf en ce que les filtres dichroïques F_{RO}, F_{VP}, et F_{BL} sont respectivement remplacés par les filtres dichroïques F_{JA}, F_{VC}, et F_{CY}.

En variante, des filtres absorbants passe-haut peuvent être utilisés à la place de trois des six filtres dichroïques : F_{CY}, F_{VC}, et F_{RO}.

En variante, on peut répartir les filtres dichroïques F_{BL} F_{CY} F_{VP} F_{VC} F_{JA} et F_{RO} différemment entre les deux vidéo projecteurs 50 et 60.

Le système 1 d'affichage selon l'invention comporte également des moyens de calcul adaptés à mettre en oeuvre, pour chaque pixel pix de l'image représentée par le fichier XMP généré par le logiciel SPEOS, et pour chacune des six couleurs primaires BL, ..., RO, les étapes E300 de calcul des niveaux de luminance N(pix, BL), ..., N(pix, RO), et E400 de calcul des signaux de pilotage V_{BL}, ..., V_{RO}.

Dans le mode de réalisation décrit ici, les moyens de mise en oeuvre de l'étape E300 de calcul des niveaux de luminance sont constitués par l'ordinateur 3, en combinaison avec le logiciel SPEOS, celui ci étant modifié pour permettre l'affichage des six couleurs primaires via les vidéoprojecteurs 50 et 60. Dans sa version standard, SPEOS projette le spectre radiométrique du pixel sur les trois composantes normalisées X, Y et Z des standards colorimétriques. Puis, SPEOS transforme ces trois composantes X, Y et Z en trois composantes R, V et B grâce à une matrice de transformation qui fait intervenir les primaires du moniteur vidéo servant pour l'affichage. Les trois composantes RVB sont alors envoyées au moniteur.

Conformément à l'invention, on projette directement le spectre radiométrique du pixel sur les six spectres des six primaires. Les six composantes ainsi obtenues sont alors pondérées par les coefficients de calibration puis envoyées aux deux vidéo projecteurs modifiés.

Les primaires X, Y et Z de l'affichage vidéo classique utilisées par le logiciel sont donc remplacées par les six primaires BL, ..., RO.

Dans le mode préféré de réalisation décrit ici, les moyens de mise en oeuvre de l'étape E400 de calcul des signaux de pilotage sont constitués par une carte graphique 4 installée dans l'ordinateur 3 et par les logiciels pilotes (en anglais « driver ») de cette carte 4.

Plus précisément, et de façon très avantageuse, l'ordinateur 3 est équipé du système d'exploitation Windows NT, 2000 ou XP (marque déposée) commercialisé par la société MICROSOFT, et la carte graphique 4 est du type « Dual Screen ».

On peut en particulier utiliser la carte commercialisée par la société 3Dlabs sous la référence Wildcat 7210, ou la carte commercialisée par la société NVidia sous la référence QuadroFX 500

Une telle carte comporte deux sorties d'écrans référencées 41 et 42 sur la figure 5.

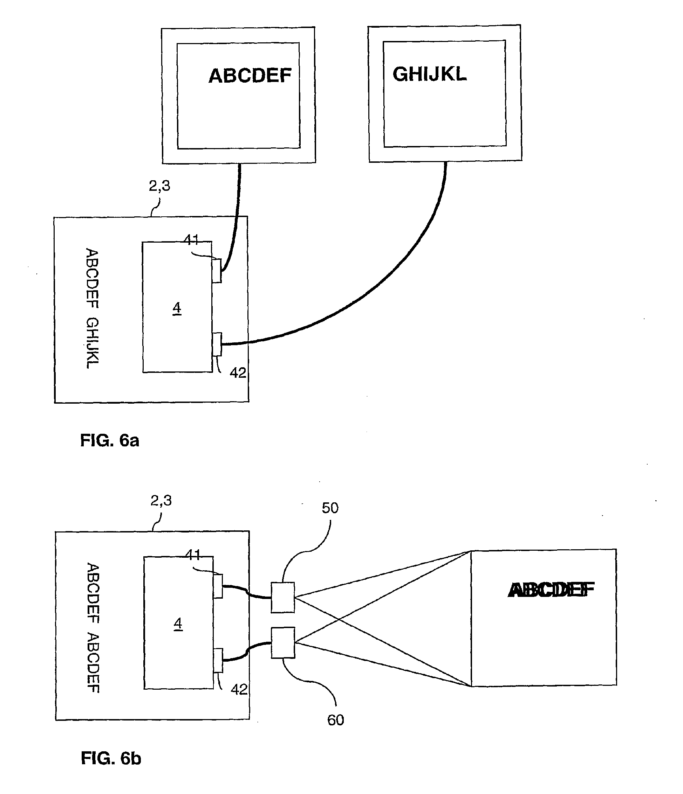

De façon connue, une telle carte est traditionnellement utilisée pour afficher un écran Windows élargi sur deux moniteurs séparés, reliés respectivement aux sorties d'écran 41 et 42, selon le schéma représenté à la **figure 6a****.**

Le mode préféré de réalisation de l'invention décrit ici utilise la carte graphique 4 d'une façon particulièrement avantageuse, selon le schéma de la **figure 6b**.

Cette utilisation consiste à :
- afficher une première image contenant les coefficients des primaires BL, VP et RO en lieu et place des coefficients RVB classiques sur la partie gauche de l'écran WINDOWS ;
- afficher une deuxième image contenant les coefficients des primaires CY, VC et JA en lieu et place des coefficients RVB classiques sur la partie droite de l'écran WINDOWS ;
- brancher l'entrée 51 du vidéo projecteur 50 à la sortie d'écran 41, et l'entrée 51 du vidéo projecteur 60 à la sortie 42 ; et
- superposer les deux vidéo projecteurs 50 et 60 de manière à ce que les images se superposent.

On obtient ainsi l'affichage de l'image de synthèse représentée dans le fichier XMP en couleurs vraies et fidèles à la réalité.

Un autre mode de réalisation pour afficher l'image de synthèse représentée dans le fichier XMP consiste à utiliser une pluralité, notamment deux, de cartes graphiques à sortie simple chacune connectée à un des projecteurs. Chaque carte possédant une sortie d'écran traite trois couleurs. On peut en particulier utiliser la carte commercialisée par la société ATI sous la référence ATI RADEON 9800 ou la carte commercialisée par la société MSI sous la référence MSI RADEON RX600XT ou la carte commercialisée par la société NVidia sous la référence XFX GeForce FX5200.

De façon connue, une telle carte est traditionnellement utilisée pour afficher un écran Windows. Les deux cartes sont synchronisées et sont utilisées de la manière suivante :
- afficher, à l'aide de la première carte, une première image contenant les coefficients des primaires BL, VP et RO en lieu et place des coefficients RVB classiques sur un premier écran WINDOWS ;
- afficher, à l'aide de la seconde carte, une deuxième image contenant les coefficients des primaires CY, VC et JA en lieu et place des coefficients RVB classiques sur un second écran WINDOWS ;
- brancher l'entrée d'un premier vidéo projecteur à la sortie d'écran de le première carte, et l'entrée d'un second vidéo projecteur à la sortie de la seconde carte ; et
- superposer les deux vidéo projecteurs de manière à ce que les images se superposent.

L'invention peut notamment être utilisée pour afficher des images de rendu hyper réaliste, sans détériorer les nuances de couleur.

## Revendications

1. Procédé d'affichage d'une image numérique comportant une étape d'obtention d'un spectre radiométrique (XMP) pour chaque pixel (pix) de cette image et ce sur tout le spectre de la lumière visible, **caractérisé en ce que** :
- l'on sélectionne (E200) six couleurs primaires en :
- découpant (E202) un spectre blanc continu en six bandes spectrales (BL) jointives ;
- associant (E204) à chacune desdites bandes un point (P_{BL}) dans l'espace des couleurs dont la position dépend de la longueur d'onde centrale (λ_{BL}) de ladite bande (BL) ; et
- ajustant (E206) lesdits points (P_{BL}) de manière à optimiser la surface de l'hexagone (H) reliant les six points par rapport à l'ensemble des couleurs visibles ;
pour chacun desdits pixels, et pour chacune desdites couleurs primaires,
- on calcule (E300) un niveau de luminance (N(pix, BL)) directement à partir dudit spectre radiométrique (XMP) sans passer par une étape intermédiaire de représentation de l'image sur la base de trois couleurs primaires ;
- on en déduit (E400) la valeur d'un signal de pilotage (V_{BL}) ; et
- on applique (E500) ledit signal de pilotage (V_{BL}) associé à ladite couleur primaire (BL) dans un dispositif d'affichage (10) adapté à reproduire chacune desdites couleurs primaires.

2. Procédé d'affichage selon la revendication 1, **caractérisé en ce que** l'étape de sélection desdites couleurs primaires est suivie d'une étape (E100) de calcul d'un coefficient de calibration (γ_{BL}), à partir de la mesure du flux lumineux (S_{BL}) de ladite couleur primaire (BL) restitué par ledit dispositif d'affichage (10), et **en ce qu'**on prend en compte ledit coefficient de calibration (γ_{BL}), pour le calcul dudit signal de pilotage (V_{BL}).

3. Procédé d'affichage selon la revendication 1 ou 2, **caractérisé en ce qu'**on ajuste la largeur desdites bandes (BL) de manière à obtenir des niveaux de luminance visuelle (N(pix, BL)) sensiblement équivalents.

4. Procédé d'affichage selon l'une des revendications 1 à 3, **caractérisé en ce que** ledit dispositif d'affichage (10) est constitué par deux vidéo-projecteurs (50, 60) dont les images respectives sont superposées.

5. Procédé d'affichage selon la revendication 4, **caractérisé en ce que** chaque vidéo projecteur (50, 60) est connecté à une des sorties vidéo (41, 42) d'une même carte graphique (4) installée dans un ordinateur (3).

6. Procédé d'affichage selon la revendication 5, **caractérisé en ce que** ladite carte graphique (4) est du type « Dual Screen » (marque déposée).

7. Procédé d'affichage selon la revendication 4, **caractérisé en ce que**, deux cartes graphiques étant installées dans un ordinateur, un premier vidéo projecteur est connecté à la sortie vidéo d'une première carte graphique, un second vidéo projecteur est connecté à la sortie vidéo d'une seconde carte graphique.

8. Système d'affichage (1) d'une image numérique conçus pour la mise en oeuvre du procédé selon les revendications 1 à 7 comportant :
- un dispositif (2) de génération d'un fichier informatique comportant des données représentatives d'un spectre radiométrique (XMP) de chacun des pixels (pix) de ladite image et ce sur tout le spectre de la lumière visible ;
- des moyens de sélection de six couleurs primaires par :
- découpe d'un spectre blanc continu en six bandes spectrales jointives ;
- association, à chacune desdites bandes, d'un point (P_{BL}) dans l'espace des couleurs dont la position dépend de la longueur d'onde centrale (λ_{BL}) de ladite bande (BL) ; et
- ajustement desdits points (P_{BL}) de manière à optimiser la surface de l'hexagone (H) reliant les six points par rapport à l'ensemble des couleurs visibles ;
- des moyens (3) de calcul adaptés à calculer, à partir dudit fichier, pour chacun desdits pixels et pour au moins quatre couleurs primaires :
- un niveau de luminance (N(pix, BL)) directement à partir dudit spectre radiométrique (XMP) sans passer par une étape intermédiaire de représentation de l'image sur la base de trois couleurs primaires ; et
- un signal de pilotage (V_{BL}) associé à ladite couleur primaire (BL) en fonction de ladite luminance (N(pix, BL)) ; et
- un dispositif d'affichage (10) relié auxdits moyens de calcul (3) comportant au moins une entrée (51) associée à chacune desdites couleurs primaires.

9. Système d'affichage selon la revendication 8, **caractérisé en ce que** le dispositif d'affichage (10) est constitué par deux vidéo projecteurs (50, 60) à trois primaires dont les images respectives sont superposées.

10. Système d'affichage selon la revendication 9, **caractérisé en ce que** chacun desdits vidéo projecteurs comporte un jeu adapté de filtres optiques (F_{BL}), agencé de manière à reproduire trois des six couleurs primaires

11. Système d'affichage selon la revendication 10, **caractérisé en ce que** chaque vidéo projecteur (50, 60) est connecté à une des sorties vidéo (41, 42) d'une même carte graphique (4) du type « Dual Screen » (marque déposée).

12. Système d'affichage selon la revendication 10, **caractérisé en ce qu'**il comprend deux cartes graphiques, un premier vidéo projecteur étant connecté à la sortie vidéo d'une première carte graphique, un second vidéo projecteur étant connecté à la sortie vidéo d'une seconde carte graphique.

## Patentansprüche

1. Verfahren zum Anzeigen eines digitalen Bildes, umfassend einen Schritt zum Erhalten eines radiometrischen Spektrums (XMP) für jedes Pixel (pix) dieses Bildes, und dies über das gesamte Spektrum des sichtbaren Lichts, **dadurch gekennzeichnet, daß**:
- sechs Primärfarben dadurch ausgewählt werden (E200), daß:
- ein kontinuierliches weißes Spektrum in sechs nebeneinanderliegende Spektralbänder (BL) zerlegt wird;
- einem jeden der Bänder ein Punkt (P_{BL}) im Farbraum zugeordnet wird, dessen Position von der mittleren Wellenlänge (λ_{BL}) des Bandes (BL) abhängt; und
- die Punkte (P_{BL}) derart ausgerichtet werden, daß die Fläche des die sechs Punkte verbindenden Sechsecks (H) in Bezug auf alle sichtbaren Farben optimiert wird;
für jedes der Pixel und für jede der Primärfarben,
- eine Leuchtdichtestufe (N(pix, BL)) direkt anhand des radiometrischen Spektrums (XMP) berechnet wird (E300), ohne über einen Zwischenschritt zur Darstellung des Bildes auf der Basis von drei Primärfarben zu gehen;
- hieraus der Wert eines Steuersignals (V_{BL}) abgeleitet wird; und
- das der Primärfarbe (BL) zugeordnete Steuersignal (V_{BL}) bei einer Anzeigevorrichtung (10), die geeignet ist, eine jede der Primärfarben wiederzugeben, angelegt wird (E500).

2. Anzeigeverfahren nach Anspruch 1, **dadurch gekennzeichnet, daß** sich an den Schritt des Auswählens der Primärfarben ein Schritt (E100) zur Berechnung eines Kalibrierkoeffizienten (γ_{BL}) anhand der Messung des durch die Anzeigevorrichtung (10) wiedergegebenen Lichtstroms (S_{BL}) der Primärfarbe (BL) anschließt, und daß der Kalibrierkoeffizient (γ_{BL}) für die Berechnung des Steuersignals (V_{BL}) berücksichtigt wird.

3. Anzeigeverfahren nach Anspruch 1 oder 2, **dadurch gekennzeichnet, daß** die Breite der Bänder (BL) derart eingestellt wird, daß im wesentlichen äquivalente Leuchtdichtestufen (N(pix, BL)) erhalten werden.

4. Anzeigeverfahren nach einem der Ansprüche 1 bis 3, **dadurch gekennzeichnet, daß** die Anzeigevorrichtung (10) durch zwei Video-Projektionsgeräte (50, 60) gebildet ist, deren jeweilige Bilder übereinanderliegen.

5. Anzeigeverfahren nach Anspruch 4, **dadurch gekennzeichnet, daß** jedes Video-Projektionsgerät (50, 60) an einen der Videoausgänge (41, 42) einer in einem Computer (3) installierten gleichen Grafikkarte (4) angeschlossen ist.

6. Anzeigeverfahren nach Anspruch 5, **dadurch gekennzeichnet, daß** die Grafikkarte (4) vom Typ "Dual Screen" (eingetragene Marke) ist.

7. Anzeigeverfahren nach Anspruch 4, **dadurch gekennzeichnet, daß** wenn zwei Grafikkarten in einem Computer installiert sind, ein erstes Video-Projektionsgerät an den Videoausgang einer ersten Grafikkarte angeschlossen ist, ein zweites Video-Projektionsgerät an den Videoausgang einer zweiten Grafikkarte angeschlossen ist.

8. System zum Anzeigen (1) eines digitalen Bildes, das für die Durchführung des Verfahrens nach einem der Ansprüche 1 bis 7 ausgelegt ist, umfassend:
- eine Vorrichtung (2) zum Generieren einer Datei, die Daten enthält, welche für ein radiometrisches Spektrum (XMP) eines jeden der Pixel (pix) des Bildes repräsentativ sind, und dies über das gesamte Spektrum des sichtbaren Lichts;
- Mittel zum Auswählen von sechs Primärfarben durch:
- Zerlegen eines kontinuierlichen weißen Spektrums in sechs nebeneinanderliegende Spektralbänder;
- Zuordnen, einem jeden der Bänder, eines Punktes (P_{BL}) im Farbraum, dessen Position von der mittleren Wellenlänge (λ_{BL}) des Bandes (BL) abhängt; und
- Ausrichten der Punkte (P_{BL}) derart, daß die Fläche des die sechs Punkte verbindenden Sechsecks (H) in Bezug auf alle sichtbaren Farben optimiert wird;
- Berechnungsmittel (3), die geeignet sind, anhand der Datei, für jedes der Pixel und für wenigstens vier Primärfarben:
- eine Leuchtdichtestufe (N(pix, BL)) direkt anhand des radiometrischen Spektrums (XMP), ohne über einen Zwischenschritt zur Darstellung des Bildes auf der Basis von drei Primärfarben zu gehen, und
- ein der Primärfarbe (BL) zugeordnetes Steuersignal (V_{BL}) in Abhängigkeit der Leuchtdichte (N(pix, BL)) zu berechnen, sowie
- eine mit den Berechnungsmitteln (3) verbundene Anzeigevorrichtung (10), die wenigstens einen einer jeden der Primärfarben zugeordneten Eingang (51) umfaßt.

9. Anzeigesystem nach Anspruch 8, **dadurch gekennzeichnet, daß** die Anzeigevorrichtung (10) durch zwei Video-Projektionsgeräte (50, 60) mit drei Primärfarben gebildet ist, deren jeweilige Bilder übereinanderliegen.

10. Anzeigesystem nach Anspruch 9, **dadurch gekennzeichnet, daß** ein jedes der Video-Projektionsgeräte einen angepaßten Satz optischer Filter (F_{BL}) umfaßt, der angeordnet ist, um drei der sechs Primärfarben wiederzugeben.

11. Anzeigesystem nach Anspruch 10, **dadurch gekennzeichnet, daß** jedes Video-Projektionsgerät (50, 60) an einen der Videoausgänge (41, 42) einer gleichen Grafikkarte (4) vom Typ "Dual Screen" (eingetragene Marke) angeschlossen ist.

12. Anzeigesystem nach Anspruch 10, **dadurch gekennzeichnet, daß** es zwei Grafikkarten umfaßt, wobei ein erstes Video-Projektionsgerät an den Videoausgang einer ersten Grafikkarte angeschlossen ist, wobei ein zweites Video-Projektionsgerät an den Videoausgang einer zweiten Grafikkarte angeschlossen ist.

## Claims

1. A display method for displaying a digital image, the method comprising a step of obtaining a radiometric spectrum (XMP) for each pixel (pix) of the image over the entire visible spectrum, and being **characterized in that**
- six primary colors are selected (E200) by:
- subdividing (E202) a continuous white spectrum into six contiguous spectral bands (BL);
- associating (E204) each of said bands with a point (P_{BL}) in the color space, the position of which depends on the wavelength of the center wavelength (λ_{BL}) of said band (BL); and
- adjusting (E206) said points (P_{BL}) in such a manner as to optimize the area of the hexagon (H) interconnecting the six points with respect to the set of visible colors;
for each of said pixels, and for each of said primary color (BL):
- a luminance level (N(pix, BL)) is calculated (E300) directly from said radiometric spectrum (XMP) without carrying out an intermediate step of representing the image on the basis of three primary colors;
- the value of a driver signal (V_{BL}) is deduced (E400) therefrom; and
- said driver signal (V_{BL}) associated with said primary color (BL)is applied (E500) to a display device (10) adapted to reproduce each of said primary colors.

2. A display method according to claim 1, **characterized in that** the step of selecting said primary colors is followed by a step (E100) of calculating a calibration coefficient (γ_{BL}) from the measured light flux (S_{BL}) of said primary color (BL) reproduced by said display device (10), and **in that** account is take of said calibration coefficient (γ_{BL}) for calculating said driver signal (V_{BL}).

3. A display method according to claim 1 or 2, **characterized in that** the widths of said bands (BL) are adjusted so as to obtain visual luminance levels (N(pix, BL)) that are substantially equivalent.

4. A display method according to claim 1 to 3, **characterized in that** said display device (10) is constituted by two video projectors (50, 60) whose respective images are superimposed.

5. A display method according to claim 4, **characterized in that** each video projector (50, 60) is connected to one of the video outputs (41, 42) of a same graphics card (4) installed in a computer (3).

6. A display method according to claim 5, **characterized in that** said graphics card (4) is of the "Dual Screen" type (registered trademark).

7. A display method according to claim 4, **characterized in that**, two graphics cards being installed in a computer, a first video projector is connected to the video output of a first graphics card, and a second video projector is connected to the video output of a second graphics card.

8. A display system (1) for displaying a digital image designed to implement the method of claims 1 to 7 comprising:
- a device (2) for generating a computer file comprising data representative of a radiometric spectrum (XMP) for each of the pixels (pix) of said image, and over the entire visible light spectrum;
- means for selecting six primary colors by:
- subdivision (E202) of a continuous white spectrum into six contiguous spectral bands (BL);
- association (E204) of each of said bands with a point (P_{BL}) in the color space, the position of which depends on the wavelength of the center wavelength (λ_{BL}) of said band (BL); and
- adjustment (E206) of said points (P_{BL}) in such a manner as to optimize the area of the hexagon (H) interconnecting the six points with respect to the set of visible colors;
- calculation means (3) suitable for calculating, from said file, for each of said pixels and for at least four primary colors:
- a luminance level (N(pix, BL)) directly from said radiometric spectrum (XMP) without carrying out an intermediate step of representing the image on the basis of three primary colors; and
- a driver signal (V_{BL}) associated with said primary color (BL) as a function of said luminance (N(pix, BL)); and
- a display device (10) connected to said calculation means (3) and having at least one input (51) associated with each of said primary colors.

9. A display system according to claim 8, **characterized in that** the display device (10) is constituted by two video projectors (50, 60) having three primary colors each, the respective images of which are superimposed.

10. A display system according to claim 9, **characterized in that** each of said video projectors includes an appropriate set of optical filters (F_{BL}), arranged in such a manner as to reproduce three of the six primary colors.

11. A display system according to claim 10, **characterized in that** each video projector (50, 60) is connected to one of the video outputs (41, 42) of a same graphics card (4) of the "Dual Screen" type (registered trademark).

12. A display system according to claim 10, **characterized in that** it comprises two graphics cards, a first video projector being connected to the video output of a first graphics card, and a second video projector being connected to the video output of a second graphics card.
